(19) Europäisches Patentamt
European Patent Office
Office européen des brevets

(11) Publication number: 0 426 292 A1

(12) # EUROPEAN PATENT APPLICATION

(21) Application number: 90310221.8

(22) Date of filing: 18.09.90

(51) Int. Cl.5: **A01N 25/18**, A01N 59/06, A01N 59/04, A01N 59/02, A01N 47/14, A01N 47/06

(30) Priority: 29.09.89 US 414672

(43) Date of publication of application: 08.05.91 Bulletin 91/19

(84) Designated Contracting States: AT BE CH DE DK ES FR GB GR IT LI LU NL SE

(71) Applicant: UNION OIL COMPANY OF CALIFORNIA
1201 West 5th Street
Los Angeles California 90017(US)

(72) Inventor: Young, Donald C.
245 Altura Drive
Fullerton, California 92635(US)
Inventor: Green II, James A.
4175 Bernardo Court
Chino, California 91710(US)

(74) Representative: Jack, Bruce James et al
FORRESTER & BOEHMERT
Widenmayerstrasse 4
W-8000 Munchen 22(DE)

(54) **Thickened fumigant compositions.**

(57) Viscous fumigant compositions comprise carbon disulfide precursors, such as thiocarbonates, xanthates, and dithiocarbamates, that decompose upon application to release carbon disulfide. The compositions exhibit an improved active life when applied, for example, to soil.

EP 0 426 292 A1

# THICKENED FUMIGANT COMPOSITIONS

## TECHNICAL FIELD

This invention relates to the field of agricultural chemicals, in particular, to fumigant compositions that release carbon disulfide, and to methods of using such compositions.

## BACKGROUND

The process of soil fumigation requires the movement of gaseous chemicals through the soil and the maintenance of a sufficient concentration of gas for a sufficient time at given temperature and pressure conditions to be lethal to the pest which would be controlled. The degree of volatility of the chemical agent is critical to successful fumigation, since a very volatile substance will disperse too readily and not develop an effective concentration except for locations very close to the point of introduction to the soil. Substances having a very low volatility are also undesirable, since they will not disperse in the soil and will be effective only at locations near the point of introduction.

Since fumigants typically are effective against a pest only during specific phases in the life cycle of the pest, some measures must be taken to ensure that the fumigant is present during the proper phases. This requirement normally has been met by either applying highly persistent chemicals, applying large enough doses of the chemicals so that the normal decomposition, leaching, volatilization, and other processes will have a lesser effect upon pesticide concentration in the treated environment, or, for highly volatile chemicals, enclosing the treated area (such as by covering soils) for sufficient time to achieve control of the pest. Unfortunately, most of the persistent chemicals are now environmentally undesirable, and the noted application methods are sometimes prohibitively expensive.

Compositions that release carbon disulfide, including thiocarbonates, xanthates, and dithiocarbamates, have many uses as biocides, such as nematocides, fungicides, acaricides, and insecticides, in agriculture and other fields. Carbon disulfide itself is a highly volatile, flammable liquid. Its vapors tend to diffuse freely and to dissipate quickly, can form explosive mixtures with air, and can be ignited by static electricity. The volatility can be a disadvantage in agricultural uses such as the fumigation of soil or the treatment of the aerial portions of plants. In such situations, if the carbon disulfide dissipates too quickly, contact time between the carbon disulfide and the organism to be controlled may not be sufficient for the most effective control.

Of particular interest are compositions comprising trithiocarbonates and tetrathiocarbonates. Many such compositions, and methods of making and using them, are described in our copending U.S. patent applications Serial No. 07/262,962 filed October 28, 1988 for THIOCARBONATE SOLUTIONS; Serial No. 07/262,961 filed October 28, 1988 for STABILIZED THIOCARBONATE SOLUTIONS; Serial No. 07/128,146 filed December 3, 1987 for FUMIGATION METHODS AND COMPOSITIONS; Serial No. 06/931,517 filed November 17, 1986, for FUMIGATION COMPOSITIONS; Serial No. 07/055,923 filed May 29, 1987 for STABILIZED THIOCARBONATE SOLUTIONS; Serial No. 07/055,719 filed May 29, 1987 for CALCIUM THIOCARBONATES: and Serial No. 07/056,143 filed May 29, 1987 for METHOD OF FUMIGATION; and in U.S. Patents 4,476,113, 4,551,167, and 4,726,144. All of the above-identified patents and patent applications are incorporated by reference herein in their entirety. The compositions are stable during storage and handling, and decompose in use to release biocidally effective amounts of carbon disulfide and certain other biocidal materials.

As disclosed in U.S. Patent 4,726,144, certain thiocarbonate compositions are more effective as soil fumigants when applied to moist soil or in combination with irrigation water. The decomposition of such thiocarbonate compositions is substantially retarded when application is made to moist or moistened soil, particularly when the soil contains water at more than 50 percent of saturation. Thus, the fumigant, i.e., the carbon disulfide released by decomposition of the thiocarbonates, can penetrate soil to a greater depth for performing its function.

Only a small proportion of the world's agricultural land is regularly irrigated by artificial means. Most farming is done on a "dry land" basis, which depends for the most part on natural rainfall to provide the soil moisture for crop growth. Because rainfall patterns tend to be irregular and unpredictable, soil conditions can vary widely from time to time, from parched to flooded. The life cycles of crops and pathogens also

vary, and these factors may determine when a pesticide is best applied. Thus, it is not always convenient or even possible to apply soil treatments such as fumigants when the soil has a desired moisture content.

## SUMMARY OF THE INVENTION

This invention relates to viscous, liquid compositions that release carbon disulfide. The compositions exhibit controlled decomposition, especially in dry soils, that is, soils having a moisture content of less than about 50 percent of saturation. Compositions of this invention comprise a carbon disulfide precursor, for example, a thiocarbonate, a xanthate, or a dithiocarbamate, and, usually, a thickener. The viscosity of the composition delays or slows the decomposition of the precursor after application of the composition, for example to soil, and consequently postpones or prolongs the release of carbon disulfide from the composition, providing effective levels of carbon disulfide at a desired later time or over a longer period of time to achieve better control of pests.

Compositions of this invention are also useful in treating the aerial portions of plants, especially the trunks of trees. In such applications, the compositions provide higher biocidal activity over longer periods of time than non-viscous compositions.

## DETAILED DESCRIPTION OF THE INVENTION

When certain carbon disulfide precursors, particularly trithiocarbonate and tetrathiocarbonate salts, are introduced into relatively dry soil, that is, soil having a moisture content of between about 1 and about 50 percent of saturation, they tend to decompose quickly. Solid thiocarbonate salts are usually stable for extended periods in oven-dried soil, but soils in agricultural use are rarely so extremely dry. In soil having a moisture content as low as about 5 percent of saturation, even solid thiocarbonates will decompose quickly when intimately mixed with the soil. Under such conditions, substantially all of the $CS_2$ content of the thiocarbonate is released in a short period of time. Even though relatively high peak concentrations of $CS_2$ in the soil can occur, the $CS_2$ can diffuse out of the soil before certain soil pathogens have been exposed for a sufficient length of time to be killed or weakened. If the same total amount of $CS_2$ can be released at a lower, but still biocidally effective, rate over a longer period of time, more effective control of the soil pathogens can be achieved.

The liquid compositions of this invention exhibit an extended active life after application. As used herein, the term "active life" means the period of time during which a composition contains carbon disulfide precursor capable of releasing carbon disulfide, i.e., the time until the composition has released substantially all of its carbon disulfide content. When compositions of this invention are applied to soil, for example, the decomposition of the carbon disulfide precursor is delayed for a time or slowed in rate so that the compositions remain active in the soil over longer periods of time than otherwise-identical non-thickened compositions.

The active life of a composition is conveniently expressed in terms of its half-life ($t_{0.5}$), the time required for one half of the carbon disulfide content of the composition to be released after the composition is applied to a substrate being treated, such as soil. In practice, the half-life of a given composition will vary, depending on the nature of the substrate, e.g., the kind and moisture content of soil, the manner in which the composition is applied, the temperature, and other factors.

Compositions of the invention having a wide range of half-lives can be used beneficially. A shorter half-life may be preferred in one circumstance, a longer in another. For a given total amount of carbon disulfide released, one pest may respond better to higher concentrations of $CS_2$ for a shorter time while another may respond better to lower concentrations for a longer time. Susceptibility of crops to damage by $CS_2$ also varies with concentration and duration of exposure. In general, the half-life under actual conditions of use should be long enough to provide adequate duration of exposure to control the target pest. In relatively dry soil, compositions of this invention usually have a half-life of at least about 0.5 hour, preferably at least about 1 hour. Compositions having longer half-lives, even half-lives measured in days or weeks, can be used beneficially.

The viscosity of compositions of this invention in the absence of shear is an indication of the behavior of the composition in the soil, and thus is a critical property for the purpose of this invention. Once the composition has been applied to soil, the composition, by virtue of its viscosity, tends to resist becoming

absorbed into the soil. The composition is slower to disperse into the soil by liquid flow than a liquid of lower viscosity, such as water. If the composition is thixotropic, its viscosity in the absence of shear can be very high, even in effect infinite, so that it does not flow appreciably in the absence of applied force. Because dispersion of these compositions into the soil is limited, direct contact of the carbon disulfide precursor with the surfaces of soil particles is also limited and, as a result, decomposition of the precursor is retarded. Thus, compositions of this invention have sufficient viscosity to extend the active life of the composition in soil.

Although the viscosity of these compositions in the absence of shear is of critical importance, that property is difficult to measure. Furthermore, once shear is removed from a thixotropic composition, a short period of time is required for the gel-like structure of the composition to reform. It is therefore desirable for the compositions to exhibit a minimum viscosity in the presence of shear sufficient to limit the dispersion of the compositions in soil or to increase the thickness of a film of the composition that will adhere to an aerial portion of a plant. Brookfield viscosity is a convenient measure of this property. Compositions of the invention usually have a Brookfield viscosity of at least about 10 centipoise, preferably at least about 100 centipoise. For use in soil, the compositions preferably have a Brookfield viscosity of at least about 500 centipoise, and more preferably at least about 1000 centipoise. The term "Brookfield viscosity" as used herein refers to viscosity as measured at about 25° C with a Brookfield viscometer using a Number 3 spindle at 20 revolutions per minute and applying a factor of 50 to the scale reading.

Compositions of the invention are applied as liquids or as liquid components which interact to form a gel in situ. There is no particular upper limit to the viscosity of these liquids, provided only that they can be made to flow using the equipment available.

## Carbon Disulfide Precursors

Any compound that decomposes in soil to release carbon disulfide can be used in the practice of this invention. Suitable compounds include, but are not limited to, thiocarbonates, xanthates, and dithiocarbamates. Preferred for use in this invention are carbon disulfide precursors that tend to decompose upon contact with soil. The more sensitive a precursor is to contact with soil, the greater the benefit that will be realized through the use of that precursor in accordance with this invention.

As used herein, the term "thiocarbonate" shall mean those compounds containing at least one structural unit:

$$-S-\overset{\overset{S}{\|}}{C}-S_n-$$

wherein n is at least 1, usually 1 or 2. When n is 1, the compound containing the group is a trithiocarbonate; when n is 2, the compound is a tetrathiocarbonate. Thiocarbonates usually employed in the invention are those containing a group of the general formula:

$(C_aS_b)$

wherein a is between about 1 and about 4, b is between about 3 and about 12, and $(C_aS_b)$ is present as the anionic moiety in a salt, as the acidic moiety in a thioester, or as a ligand in a metallic complex. The term "complex" shall refer to any compound in which $(C_aS_b)$ acts as a complexing ligand.

The thiocarbonate salts and thioesters have the general formula:

$M_c(C_aS_b)_y$

wherein a, the number of carbon atoms, ranges between about 1 and about 4, preferably between about 1 and about 3, and more preferably is 1; b, the number of sulfur atoms, ranges between about 3 and about 12, preferably between about 3 and about 6, and more preferably is 3 or 4; M is hydrogen, a cationic salt-forming moiety or an organic thioester-forming radical; y is the valence of M; and c is the valence of $(C_aS_b)$.

Suitable cationic salt-forming moieties for M are ammonium, quaternary ammonium, quaternary phosphonium, quaternary arsonium, metals and metal complexes formed with commonly known ligands such as ammonia, ethylenediamine, diethylenetriamine, propylenediamine and pyridine. Metals can include heavy metals such as iron, copper, nickel, zinc, lead, or cadmium. Preferably these moieties are ammonium or metals, more preferably alkaline earth or alkali metals, most preferably ammonium, sodium or potassium, and very most preferably potassium.

Suitable thioester-forming organic radicals for M are alkyl, cycloalkyl, aryl, arylalkyl or alkylaryl groups, preferably alkyl groups having from 1 to about 8 carbon atoms, more preferably alkyl groups having 1 to

about 5 carbon atoms, and most preferably alkyl groups having between 1 and about 3 carbon atoms.

Thiocarbonate complexes that can be used in the practice of this invention can be represented by the general formula:

$(CI)_x(M_z(C_aS_b)_y)$

wherein M is a cationic complex-forming metal such as tin, lead, or a transition metal such as iron, cobalt, nickel, platinum, copper, zinc, cadmium, mercury, chromium, manganese, molybdenum, etc.; CI is a neutralizing counter ion such as quaternary ammonium, quaternary arsonium, quaternary phosphonium or quaternary stibonium; a is the number of carbon atoms in the thiocarbonate group, ranging between 1 and about 4; b is the number of sulfur atoms in the complex, ranging between about 3 and about 12; x is the number of counter ions necessary to neutralize the complex; y is the number of thiocarbonate groups in the complex; and z is the number of cationic complex forming moieties in the complex.

One method for the preparation of such complexes is by reacting a mixture of an alkali metal thiocarbonate with a soluble complex forming moiety and a soluble cationic counter ion, preferably one containing quaternary ionic groups of the form:

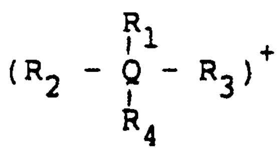

with Q being nitrogen, arsenic, antimony or phosphorus, and with each R group being separately and independently hydrogen or, preferably an organic radical, said organic radical preferably being an alkyl, aryl, cycloalkyl or alkylaryl group having up to about 50 carbon atoms. It is understood that other cationic counter ionic moieties such as alkali and alkaline earth metals may be substituted for the quaternary moieties, for example, by ion exchange techniques.

Still other thiocarbonates suitable for use in this invention are the metal salts of organic radical substituted thioesters such as potassium methyl trithiocarbonate; thiocarbonate thioester dimers having the forms $(R_5CS_3)_2$ and $(R_5CS_4)_2$ wherein each $R_5$ independently is an organic thioester-forming radical, for example, an alkyl, cycloalkyl, aryl, arylalkyl or alkylaryl group, preferably an alkyl group having from 1 to about 8 carbon atoms, more preferably an alkyl group having 1 to about 5 carbon atoms, and most preferably an alkyl group having between 1 and about 3 carbon atoms; and salts and thioesters of the general form $M_2(C_3S_5)_y$, wherein M is hydrogen, a cationic salt-forming moiety or an organic thioester-forming radical, and y is the valence of M; as well as complexes made therewith. Still other carbon-sulfur compounds within the broad definition given above and methods for synthesizing them can be found in treatises on carbon-sulfur chemistry. Where such compounds decompose upon contact with soil to release carbon disulfide, they too can be used in the practice of the present invention.

Thiocarbonates useful in this invention can be prepared in a variety of ways. Useful methods are described in the above identified U.S. patents and patent applications. Other suitable methods are described in U.S. Patent 2,893,835 to Stone et al., U.S. Patents 2,676,129 and 2,731,487 to Bashour, which are incorporated herein by reference. The methods by which the thiocarbonates are prepared are not considered to be critical for the purposes of this invention. Any convenient method may be used.

As used herein, the term "xanthate" shall mean those compounds containing a xanthate group, which is represented by the general formula:

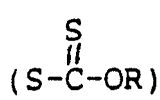

wherein R is an organic ester-forming moiety and the xanthate group is present as the anionic moiety in a salt, as the acidic moiety in a thioester, or as a ligand in a metallic complex. R can be any alkyl, cycloalkyl, aryl, arylalkyl or alkylaryl group, preferably an alkyl group having from 1 to about 8 carbon atoms, more preferably an alkyl group having 1 to about 5 carbon atoms, and most preferably an alkyl group having between 1 and about 3 carbon atoms. The term "complex" shall refer to any compound in which the xanthate group acts as a complexing ligand.

The xanthate salts and thioesters have the general formula:

$$M(S-\overset{\overset{S}{\|}}{C}-OR)_y$$

wherein M is hydrogen, a cationic salt-forming moiety or an organic thioester-forming radical; and y is the valence of M. M can be any of the cationic salt-forming moieties and organic thioester-forming radicals described above in connection with thiocarbonate salts and thioesters.

Xanthates and methods of making them have been described in patents and the technical literature. See, for example, U.S. Patent 4,078,912 to Hawkins.

Xanthate complexes that can be used in the practice of this invention can be represented by the general formula:

$$(CI)_x(M_z(S-\overset{\overset{S}{\|}}{C}-OR)_y)$$

wherein M is a cationic complex-forming metal such as tin, lead, or a transition metal such as iron, cobalt, nickel, platinum, copper, zinc, cadmium, mercury, chromium, manganese, molybdenum, etc.; CI is a neutralizing counter ion such as quaternary ammonium, quaternary arsonium, quaternary phosphonium or quaternary stibonium; x is the number of counter ions necessary to neutralize the complex; y is the number of xanthate groups in the complex; and z is the number of cationic complex forming moieties in the complex. Such complexes can be prepared in a manner analogous to that of the thiocarbonate complexes described above.

As used herein, the term "dithiocarbamate" shall mean compounds having the general formula:

$$(R_6)_2N-\overset{\overset{S}{\|}}{C}-SM$$

wherein M is a cationic moiety, preferably ammonium or alkali metal, and each $R_6$ independently is hydrogen or an organic radical, the organic radical preferably being an alkyl, aryl, cycloalkyl or alkylaryl group having up to about 50 carbon atoms. Dithiocarbamates can act as carbon disulfide precursors under acidic conditions. An example is sodium N-methyldithiocarbamate.

## Liquid Carriers

This invention is directed to liquid compositions, that is, compositions that are applied as liquids, and preferably manufactured and transported in liquid form as well. In certain embodiments of the invention, the composition may become very viscous, semi-solid, or even a solid gel once applied. However, in all cases, the compositions are flowable liquids during application. Since the carbon disulfide precursors themselves are usually solids, a liquid carrier is usually needed to dissolve or disperse the carbon disulfide precursor.

Any liquid carrier known to be useful for the application of agricultural pesticides can be used in the practice of this invention. The liquid carrier can be a solvent or a non-solvent for the carbon disulfide precursor. That is, the carbon disulfide precursor can be dissolved in the liquid carrier or merely dispersed therein, as in an emulsion or a suspension of solid particles. Organic liquids such as gasoline, diesel oil, other petroleum distillates, alcohols such as methanol and ethanol, acetone, ketones, ethers, halogenated hydrocarbons, and the like can be used.

Water is by far the preferred liquid carrier, for reasons of cost, safety, and environmental acceptability.

## Thickeners

Thickeners normally used in the practice of this invention include two general types: (a) viscosity-enhancing thickeners, i.e., materials that increase the viscosity of a liquid in which they are dissolved or dispersed, and (b) cross-linking thickeners, i.e., materials that cross-link and set up a gel-like structure.

Viscosity-increasing thickeners include both organic and inorganic materials, including natural, modified,

and synthetic polymers, proteins, pectins, hydrophilic colloids, gums, starches, silicas, and clays soluble or dispersible in the liquid carrier. Any material that increases the viscosity of the liquid composition and does not adversely affect the carbon disulfide precursor can be used.

Suitable clays include sepiolite, attapulgite, montmorillonite, bentonite, and kaolin.

Other suitable inorganic thickeners include phosphates and polyphosphates, which cross-link or gel in the presence of calcium; silicates and polysilicates; any high surface area silicas including pyrolytic silicas such as the Aerosil and Cab-o-sil brands; aluminates; and aluminosilicates. These materials are well known as thickeners for aqueous systems.

Suitable gums include vegetable gums such as guar gums, xanthan gums, gum karaya, gum arabic, and gum tragacanth. These natural resins are usually tree exudations which chemically are high-polymeric saccharides. Plant extracts such as carrageenan and pectins can also be used.

Suitable proteins include water soluble and alkali soluble proteins such as casein, ammonium caesinate, soybean proteins, gelatin, albumin, and animal glue.

Suitable starches are obtained commercially from corn, potatoes, sorghum, wheat, tapioca, sago, rice, and the like. When starch granules are heated in water, they swell and rupture to produce a viscous colloidal dispersion.

Suitable polymers include natural and synthetic polysaccharides (including modified celluloses), acrylic polymers, polyvinyl alcohol (partially hydrolysed polyvinyl acetates), polyacrylamides, and polyethylene oxides and glycols, polyvinyl pyrrolidones, formaldehyde condensates such as hexamethoxymethyl melamine and certain phenolics, and copolymers containing these materials. In aqueous systems, the polymers are usually water-soluble or dispersible with the aid of hydrophilic groups on the polymer backbone.

Suitable acrylic polymers can usually be selected from a large class of materials such as polyacrylic acids, polymethacrylic acids, polyacrylates and methacrylates, copolymers and salts thereof such as sodium polyacrylate, and optionally including other comonomers. The acrylic polymers are usually water soluble. Acid-containing cross-linked emulsion acrylic copolymers are conveniently handled and convert to solution of polyacrylate salts upon addition of alkali, producing effective thickeners.

Modified celluloses are preferred thickeners for use in aqueous compositions. These materials are stable, efficient thickeners, disperse easily in highly ionic, alkaline solutions, are nontoxic, with pure grades even used as food additives, and are biodegradeable. They are widely available in many grades of thickening ability. Specific examples include, but are not limited to, methyl cellulose, hydroxyethyl cellulose, and sodium carboxymethyl cellulose.

Thickeners that produce thixotropic compositions are especially useful. At rest, thixotropic compositions have a semi-solid, gel-like structure, but when subjected to shear stress, for example by stirring or pumping, their viscosity decreases and they flow readily. Thixotropic compositions can be prepared, handled, and pumped easily, and once they are applied and are no longer subject to shear, they regain their gel-like structure. Thickeners capable of imparting thixotropic properties to aqueous compositions of this invention include, for example, the modified celluloses, the starches, and the inorganic thickeners, such as ammonium phosphate-calcium chloride gels.

Among the cross-linking thickeners are those that will cross-link upon contact with soil or with a cross-linker present in the soil as a soil constituent or additive. Such thickeners include alginates and certain polymers, such as polyacrylates, with free carboxylate groups.

Suitable alginates are vegetable products obtained from seaweed and kelp. Alginic acid, also called algin, is chemically similar to cellulose, only having -COOH groups instead of $-CH_2OH$ groups on the polysaccharide chain, and is slowly soluble in alkali. Preferred are the alkali metal and ammonium alginates, which are water soluble. These include sodium alginate, potassium alginate, and ammonium alginate. Alginate esters, such as propylene glycol alginate, also called hydroxypropyl alginate, can be used as cross-linking thickeners if they have free carboxylic acid groups as well.

The alginates are highly preferred for use in the compositions of this invention, either as the only thickener or, more preferably, in combination with a viscosity-increasing thickener such as a modified cellulose. The alginates are viscosity-enhancers in their own right, but in the practice of this invention they have an additional mode of action. That is, they cross-link to form semi-solid gels upon contact with soil or, more specifically, upon contact with calcium ions, which may be present as a natural soil constituent or may be derived from a soil additive.

Virtually all agricultural soils contain naturally occurring or added calcium, as a soil conditioner or as a plant nutrient, or both. Thus, when a composition of this invention containing an alginate thickener is introduced into such a calcium-containing soil, calcium ion can diffuse into the composition, causing the alginate to cross-link. The viscosity of the composition is thus increased at the point of contact with the soil,

providing additional protection to the carbon disulfide precursor within the bulk of the composition. Even when the alginate-containing composition is physically worked into the soil, the active life of the composition in the soil is significantly enhanced when compared with the active life of a non-thickened composition or of a composition of this invention thickened only with a non-cross-linking type of thickener.

Other polymers and other cross-linking inducers may be used to achieve this desirable effect. For example, certain polyacrylates with free carboxylate groups are readily cross-linked by boron, which is usually present in soils as borates. Usually, it is preferable to use a cross-linking thickener that cross-links upon contact with a soil constituent that is naturally present in the soil or that is normally added as a soil supplement, but other cross-linking inducers may be added specifically for the purpose of this invention if desired.

## Formulation

Compositions of this invention are usually prepared by simple mixing. A solution, emulsion, or suspension of the carbon disulfide precursor in the liquid carrier is first prepared in any convenient way, and the thickener or thickeners are added. Alternatively, a solid composition comprising the precursor and thickener or thickeners may be prepared and then dissolved or dispersed in a liquid carrier, such as water, for use.

The carbon disulfide precursor can be present in the composition in any desired concentration from as little as 0.1 weight percent, more usually at least about 1 weight percent, up to the limit of solubility in the solution, and beyond the limit of solubility in an emulsion or suspension. For example, ammonium, alkali metal, and alkaline earth metal trithiocarbonate and tetrathiocarbonate salts are quite soluble in water, and can be used in solutions of up to about 50 weight percent concentration and usually at least about 1 weight percent concentration, preferably between about 20 and about 40 weight percent.

The selected thickener can be stirred directly into the solution, emulsion, or suspension. If the thickener tends to form lumps upon addition to the solution, it can first be mixed with a small amount of the liquid carrier with strong stirring to form a thoroughly wetted slurry that is then stirred into the solution, emulsion, or suspension of carbon disulfide precursor.

The thickener is present in a sufficient proportion to increase the viscosity of the composition to the desired level. Subject to practical limitations on the handling of viscous materials, such as pumpability, the viscosity of the composition can be made as high as desired. The exact proportion of thickener to use depends upon the efficiency of the thickener, that is, the viscosity increase per unit weight of thickener, as well as on the nature of the carbon disulfide precursor. Less thickener can be used with a precursor that is slower to decompose upon contact with soil. Qualitatively, the compositions usually flow like a light syrup to a thick honey. In practice, the upper limit of viscosity is determined by the chosen method of application, the type of pump and other equipment used, and the ambient temperature (viscosity can increase significantly at lower temperatures). Positive displacement pumps are available that can handle materials of almost any viscosity.

compositions of the invention are used or applied in viscous form. Compositions that are dilute with respect to the carbon disulfide precursor will nevertheless contain sufficient thickener to impart the desired viscosity to the composition, that is, sufficient thickener, or sufficient viscosity, to extend the active life of the composition in the soil.

A preferred embodiment of this invention comprises a thickener such as a modified cellulose and an aqueous solution of a thiocarbonate, preferably a trithiocarbonate or tetrathiocarbonate salt, more preferably an ammonium or alkali metal or alkaline earth metal trithiocarbonate or tetrathiocarbonate salt. These salts are preferred for use in this invention because they tend to decompose most quickly upon contact with soil, and thus benefit the most from the extension of active life in the soil provided by the practice of this invention. The thiocarbonate can be present in any desired concentration up to the solubility limit of the thiocarbonate in the solution. As disclosed in U.S. patent application Ser. No. 07/292,962, the more concentrated solutions, which preferably contain added base, sulfide, and/or polysulfide, are more stable; that is, solutions having equivalent $CS_2$ concentrations in excess of about 1 weight percent, preferably in excess of about 5 weight percent equivalent $CS_2$, and even in excess of 10 weight percent, are more stable than more dilute solutions. Stable concentrates having thiocarbonate concentrations corresponding to about 1 to about 20 weight percent equivalent $CS_2$ can be prepared. An example of a preferred, stabilized thiocarbonate composition is aqueous ammonium tetrathiocarbonate containing ammonium sulfide, having the empirical formula $(NH_4)_2CS_4.(NH_4)_2S$.

The modified cellulose thickener produces high viscosity solutions at low concentrations. Depending on

the grade of thickener, proportions of from about 0.01 to about 5 weight percent or more, based on the weight of solution, preferably from about 0.1 to about 3 weight percent, more preferably from about 0.5 to about 2 weight percent, can be used.

The thickened composition preferably has a high-shear viscosity of less than about 6000 centipoise, which is about the practical limit of pumpability using centrifugal pumps of the kind commonly used in agriculture. A high-shear viscosity of from about 2500 to about 3000 centipoise is presently preferred.

A highly preferred embodiment of this invention comprises a viscosity-enhancing thickener such as a modified cellulose, a cross-linking thickener such as an alginate, and an aqueous solution of a thiocarbonate, preferably a trithiocarbonate or tetrathiocarbonate salt, more preferably an ammonium or alkali metal trithiocarbonate or tetrathiocarbonate salt. The proportions of thiocarbonate and viscosity-enhancing thickener are as described immediately above. The cross-linking thickener is present in a proportion of from about 0.01 to about 5 weight percent or more, preferably from about 0.1 to about 3 weight percent, more preferably from about 0.5 to about 2 weight percent. For example, one such highly preferred composition comprises about 33 weight percent sodium tetrathiocarbonate, about 1 weight percent hydroxyethyl cellulose, and about 1 weight percent sodium alginate.

In the preparation of bulk quantities of the thickened compositions of this invention, vigorous agitation may be required to disperse and dissolve the thickener. This can result in the entrainment of numerous air bubbles and also in the loss of $CS_2$ content. The bubbles will clear from the composition after a day or two, but it is preferable to include a defoamer to minimize the amount of air initially entrained in the composition. Any defoamer suitable for use in a highly ionic, alkaline environment can be used. Specific examples include, but are not limited to, Hercules Defoamer 357 brand and Colloids brand silicone-based defoamers. The use of a closed mixing vessel, an inert atmosphere such as nitrogen, and an impeller that minimizes the entrainment of gas bubbles will help to control the loss of $CS_2$ attributable to the mixing operation. Usually less than about 100 parts per million (ppm) of the defoamer, for example, between about 10 and about 50 ppm, based on the total composition, will be sufficient to achieve adequate control of bubbles in the composition.

Methods of Application

The compositions can be applied to soil in any convenient way using conventional agricultural equipment. The compositions can be applied to the surface of the soil followed by cultivation of the soil with a harrow, disc, or the like to incorporate the composition into the soil. Alternatively, after the composition is applied to the surface of the soil, the soil can be irrigated, for example by flood, furrow, or sprinkler irrigation, to move the composition into the soil.

In one embodiment of the invention, a band of viscous composition is applied to the surface of the soil around the base of a plant or tree in order to protect the plant from crawling or creeping pests such as ants, sowbugs, snails, and slugs.

In another embodiment, the band of composition is applied to the surface of the soil and, optionally, allowed to dry. Thereafter, moisture is applied to the composition, for example by sprinkling, or even in the form of morning dew, activating or reactivating the composition to release carbon disulfide at a time when pests such as snails and slugs are more likely to be present.

In another embodiment, sufficient moisture is applied to carry the carbon disulfide precursor down into the soil so that the precursor is dispersed throughout the soil and can proceed to decompose and release carbon disulfide as if no thickener had been used. For example, to control phylloxera in vineyards, compositions of this invention can be applied to the ground around the grapevines and water can be applied with sprinklers to move the carbon disulfide precursor into the soil around the roots of the vines.

A preferred means of application for the control of subsurface soil pests is by direct injection under the soil. The composition may be applied in a pattern of spots or in continuous bands as by shanking. In shanking, an instrument having a number of parallel, hollow tines is pulled across a field. The tines penetrate the soil to a desired depth and from openings below the surface of the soil distribute the composition into the soil. In another approach, furrows are formed, the composition is deposited in the furrows, and soil is turned into the furrows to close them and bury the composition.

In another embodiment of this invention, a thickened or gelled composition is formed in situ on or in the soil by mixing of at least two separate components of the composition at the point of application. This technique avoids the difficulty involved in handling and distributing highly viscous materials while providing a composition in the soil having any desired viscosity or gel structure. Even stiff gels can be formed in situ from component streams of relatively low viscosity that are easy to handle and pump through distribution

lines.

Shanking equipment useful for the application of two-component treatments to soil is in common use or can be readily adapted for such use by any competent mechanic. One component comprises a crosslinkable thickener and the other comprises a cross-linker for the thickener. The carbon disulfide precursor can be in either or both of the components. For example, one component can comprise aqueous calcium tetrathiocarbonate solution thickened with hydroxyethyl cellulose, and the other can comprise sodium alginate. Alternatively, one component can comprise aqueous sodium tetrathiocarbonate, methyl cellulose, and an alginate, and the other can comprise a soluble calcium salt such as calcium chloride. The two components can be applied to the soil as separate streams, one after the other, the second component preferably being applied before the first can soak into the soil, so that the two components can mix together and the thickener can cross-link to prevent a substantial amount of the mixture from penetrating the soil. Alternatively, the two components can be applied simultaneously to the soil so that the thickener can cross-link before either component has time to soak into the soil. In another approach, the two components can be conducted separately to a mixing chamber where they are quickly mixed and the mixture deposited onto or into the soil before the viscosity of the mixture increases to an unmanageable level and plugs up the mixer.

## EXAMPLE 1

The nematocidal efficacy of a composition of the invention was demonstrated on growing tomato plants in a greenhouse. Six-inch diameter pots of sandy soil, with a growing tomato plant in each pot, received 1500 2nd stage larvae of the nematode Meloidogyne incognita injected into 2 holes around the tomato and covered. The test articles were added by trenching around the tomato, adding the test article, and covering with soil. Untreated controls received only water. In some treatments, as noted in the Table, test article was applied again at subsequent intervals to determine if any advantage accrued from multiple applications. All treatments were replicated 6 times. After 35 days, the tomato plants were harvested. Root galling was indexed on a scale of 0 to 5, where 5 denotes maximum galling of the root system.

Composition A, made in accordance with this invention, comprised about 32.5 weight percent sodium tetrathiocarbonate and about 1.0 weight percent Natrosol 250 brand hydroxyethyl cellulose in water, and had a Brookfield viscosity of about 3000 centipoise at 25° C. It had a honey-like consistency.

Composition B, the unmodified solution comprised about 32.8 weight percent sodium tetrathiocarbonate in water but had no thickener. It had a Brookfield viscosity of about 2.51 centipoise, hardly distinguishable from water.

Treatments are expressed as equivalent grams of $CS_2$ per pot. A $CS_2$ level of 0.39 g per pot corresponds to application of Composition A or B to a field at the rate of about 468 liters per hectare (50 gallons per acre).

TABLE 1

| | Mean Gall Index, 0-5 Scale, 6 Replicates | | |
|---|---|---|---|
| Treatment g $CS_2$/pot | Composition A (Viscous) | Composition B (Unmodified) | Difference |
| 0.39 | 1.3 | 2.0 | 0.7 |
| 0.19 | 1.5 | 1.7 | 0.2 |
| 0.19 x 2[1] | 0.8 | 2.0 | 1.2 |
| 0.08 x 3[2] | 1.6 | 3.8 | 2.2 |
| 0.08 x 4[3] | 1.1 | 1.6 | 0.5 |

[1] Applications at planting and 48 hours post-planting
[2] Applications at planting, 48 hours, and 240 hours post-planting
[3] Applications at planting, 48, 240, and 480 hours post-planting

Root gall ratings are a linear representation of exponential increases in root damage. On this scale, a difference of 0.5 root gall index unit is statistically significant, and a difference of 1.0 unit is considered to

be very significant. At all but one of the treatment levels shown in the Table, Composition A, the composition of this invention, is significantly more effective than a non-thickened composition having the same thiocarbonate content.

## EXAMPLE 2

An aqueous solution comprising 10.8 weight percent sodium tetrathiocarbonate and 2 weight percent guar gum, having an estimated viscosity of about 4000 centipoise, was painted on the trunks of 1.5 inch diameter cherry trees affected by gumosis (expression of sap due to bacterial or fungal infection). After one week further expression of sap had ceased, and the effect continued after 6 weeks.

## EXAMPLE 3

Compositions of the invention were prepared and tested for half-life and total degradation time in dry soil.

Composition C, a solution of 32.8 weight percent sodium tetrathiocarbonate in water, stabilized with added sulfide, was prepared in accordance with the method described in said U.S. Patent 4,726,144. Composition D was prepared by dissolving 1.0 part by weight of Natrosol 250 brand hydroxyethylcellulose (HEC) in 99.0 parts of the aqueous solution of sodium tetrathiocarbonate. Composition E was prepared by dissolving 1.0 part by weight of Natrosol 250 and 1.0 part of Kelgin HV brand sodium alginate in 98.0 parts of the aqueous solution of sodium tetrathiocarbonate. In each case, the viscosity of the resulting composition was about 2000 centipoise.

Unmodified sodium tetrathiocarbonate solution (C), thickened solution (D), and thickened solution with alginate (E), were added to an air-dried clay loam soil, -10 mesh, in each of three ways:

Case 1. One milliliter of solution was added as a single portion at a point on the surface of the soil in a 1200 milliliter bottle. A cap with a gas-tight sampling valve was immediately placed on the bottle. This simulates application to the surface of the soil without subsequent incorporation into the soil.

Case 2. Solutions were added as in case 1, but an additional 100 g of soil were added over the top of the added solution before the bottle was capped. This simulates direct injection into the soil or application in furrows that are promptly covered with soil.

Case 3. Same as case 2, but the bottles were shaken vigorously for 5 seconds after the bottles were capped, to disperse the added solution in the soil. This simulates application to the soil followed by incorporation with mixing into the soil, for example by plowing, discing, or harrowing.

The airspace above the soil in the bottles was sampled at various times after the addition, in order to measure carbon disulfide ($CS_2$) released by interaction of the tetrathiocarbonate with the soil. The degradation was run to completion to determine $c_{max}$, the maximum concentration of $CS_2$ achieved. Plots of $1n(1-c/c_{max})$ vs. time were linear, with slopes equal to pseudo-first-order rate constant for degradation. Half-lives ($t_{0.5}$) and times for 99 percent degradation ($t_{0.99}$) were derived from the regression equations. The results are presented in Table 2.

Table 2

| | Half-life, $t_{0.5}$, hour | | |
|---|---|---|---|
| Solution | Case 1 | Case 2 | Case 3 |
| C Unmodified | 0.14 | 0.22 | 0.12 |
| D (HEC) | 9.5 | 4.3 | 0.95 |
| E (HEC, alginate) | 7.9 | 7.7 | 6.0 |
| | Total Degradation, $t_{0.99}$, hour | | |
| Solution | Case 1 | Case 2 | Case 3 |
| C Unmodified | 0.9 | 1.2 | 1.3 |
| D (HEC) | 67.7 | 28.5 | 7.1 |
| E (HEC, alginate) | 55.6 | 52.3 | 41.7 |

Both Compositions D and E exhibit prolonged half-lives in comparison to Composition C, the unmodified sodium tetrathiocarbonate solution. Efficacy of these compositions in soil is enhanced because they prolong the exposure of soil pathogens to the carbon disulfide released during the controlled degradation of the compositions.

The results with Composition E in Case 3 are especially significant and unexpected. Composition E exhibits a dramatic increase in active life and time for total degradation, as compared with Compositions C and D, even when the composition is mechanically dispersed into the soil. Thus, preferred compositions of this invention can be applied effectively in a wider variety of ways than the other compositions, giving the user more freedom of choice in selecting a method of application.

EXAMPLE 4

An aqueous composition comprising about 30 weight percent sodium tetrathiocarbonate, stabilized with added sulfide, and about 10 weight percent sepiolite clay was prepared. Test samples were applied to sandy soil and to sandy loam soil using the procedure described in Case 2 of Example 3. The half-life of the composition in sandy soil was about 0.6 hour, and in sandy loam was about 1.0 hour.

Although this invention has been described in detail with reference to certain embodiments thereof, with particular emphasis on the use of aqueous thiocarbonate compositions in soil fumigation, other modifications are possible. Thus, the invention is not limited to the specific embodiments described herein, since many obvious modifications can be made, and it is intended to include within this invention any such modifications as will fall within the scope of the following claims.

## Claims

1. A liquid composition comprising a carbon disulfide precursor and having a Brookfield viscosity of at least about 10 centipoise.

2. A liquid composition comprising a carbon disulfide precursor and a thickener.

3. A liquid composition comprising a carbon disulfide precursor and a cross-linking thickener.

4. A liquid composition comprising a carbon disulfide precursor, a first thickener, and a second, cross-linking thickener.

5. A composition according to any one of claims 1 to 4, wherein the carbon disulfide precursor comprises a thiocarbonate.

6. A composition according to any one of claims 1 to 4, wherein the carbon disulfide precursor comprises a xanthate.

7. A composition according to any one of claims 1 to 4, wherein the carbon disulfide precursor comprises a dithiocarbamate.

8. A composition according to claim 5, wherein the thiocarbonate comprises an ammonium, alkali metal, or

alkaline earth metal trithiocarbonate or tetrathiocarbonate salt.

9. A composition according to any preceding claim, having a viscosity of at least about 100 centipoise.

10. A liquid soil fumigant composition comprising a thiocarbonate selected from ammonium, alkali metal, and alkaline earth metal trithiocarbonates and tetrathiocarbonates, water, and a thickener.

11. A composition according to claim 2, 3 or 4, or any claim dependent thereon, or claim 10, wherein the thickener, or one of the thickeners, is effective to extend the active life of the composition in soil.

12. A composition according to claim 2, 3 or 4, or any claim dependent thereon, or claim 10, wherein the thickener, or one of the thickeners, comprises a modified cellulose.

13. A composition according to claim 3 or 4, or any claim dependent thereon, wherein the cross-linking thickener cross-links upon contact with soil.

14. A composition according to claim 13, wherein the cross-linking thickener comprises an alginate.

15. A composition according to claims 10 and 12, comprising between about 1 and about 50 weight percent of the thiocarbonate and between about 0.01 and about 5 weight percent of a modified cellulose thickener.

16. A composition according to claim 15, wherein the thiocarbonate comprises sodium tetrathiocarbonate.

17. A composition according to any preceding claim, having a half-life of at least about 0.5 hour in soil having a moisture content of less than about 50 percent of saturation.

18. A composition according to claim 4 or any claim dependent thereon, wherein the first thickener is a modified cellulose and the second, cross-linking thickener is an alginate.

19. A liquid composition having a Brookfield viscosity of at least about 100 centipoise and comprising a thiocarbonate, water, and a cross-linking thickener that further increases the viscosity of the composition upon contact with soil.

20. A composition according to claim 19, wherein the thiocarbonate comprises an ammonium, alkali metal, or alkaline earth metal trithiocarbonate or tetrathiocarbonate salt.

21. A composition according to claim 19, wherein the thiocarbonate comprises a thiocarbonate thioester dimer.

22. A composition according to any one of claims 19 to 21, wherein the cross-linking thickener comprises an alginate.

23. A method of treating soil which comprises applying to the soil a liquid composition in accordance with any preceding claim.

24. A method of treating soil which comprises applying to the soil a liquid composition comprising a carbon disulfide precursor and having a Brookfield viscosity of at least about 100 centipoise.

25. A method according to claim 23 or 24, wherein the composition is applied to the surface of the soil.

26. A method according to claim 25, wherein moisture is subsequently added to the composition.

27. A method according to claim 25, wherein the composition is allowed to dry and moisture is then added to rewet the composition.

28. A method according to claim 25, wherein sufficient moisture is then applied to move the composition into the soil.

29. A method according to any one of claims 23 to 28, wherein the composition comprises an aqueous solution and has a viscosity of at least about 500 centipoise.

30. A method according to claim 23 or 24, wherein the composition is applied beneath the surface of the soil.

31. A method according to claim 30, wherein the composition comprises an aqueous solution and has a viscosity of at least about 1000 centipoise.

32. A method of treating soil which comprises applying to soil a first, liquid component comprising a cross-linking thickener, and a second component comprising a cross-linker for the thickener, at least one of said components also comprising a carbon disulfide precursor, and said first and second components interacting to form a composition having a viscosity greater than that of the first component alone.

33. A method according to claim 32, wherein the second component is also liquid.

34. A method according to claim 32, wherein the carbon disulfide precursor comprises a thiocarbonate.

35. A method according to claim 32, wherein the carbon disulfide precursor comprises a xanthate.

36. A method according to claim 32, wherein the carbon disulfide precursor comprises a dithiocarbamate.

37. A method according to claim 34, wherein the thiocarbonate comprises an ammonium, alkali metal, or alkaline earth metal trithiocarbonate or tetrathiocarbonate salt.

38. A method according to claim 34, wherein the thiocarbonate comprises a thiocarbonate thioester dimer.

39. A method treating plants which comprises applying to an aerial portion of a plant a liquid composition comprising a carbon disulfide precursor and having a Brookfield viscosity of at least about 10 centipoise.

40. A method treating plants which comprises applying to an aerial portion of the plant a liquid composition in accordance with any one of claims 1 to 22.

41. A method according to claim 39 or 40, wherein the composition has a viscosity of at least 100 centipoise.

42. A method of treating trees which comprises applying to at least a portion of the tree trunk a liquid composition comprising a carbon disulfide precursor and having a Brookfield viscosity greater than that of a 32.8 weight percent aqueous solution of sodium tetrathiocarbonate.

43. A method of treating trees which comprises applying to at least a portion of the tree trunk a liquid composition in accordance with any one of claims 1 to 22 and which has a Brookfield viscosity greater than that of a 32.8 weight percent aqueous solution of sodium tetrathiocarbonate.

44. A method according to claim 42 or 43, wherein the composition has a viscosity substantially greater than that of the aqueous solution of sodium tetrathiocarbonate.

45. A liquid composition comprising a carbon disulfide precursor and having a sufficient viscosity that, when the composition is applied to sandy soil comprising at least 90 weight percent sand having particle sizes in the range of about 0.05 to about 2.0 millimeter, the composition permeates the soil slower than the same quantity of a 32.8 weight percent aqueous solution of sodium tetrathiocarbonate applied to identical soil in the same way.

46. A liquid composition comprising a carbon disulfide precursor and having a sufficient viscosity that, when the composition is applied to sandy soil comprising at least 90 weight percent sand having particle sizes in the range of about 0.05 to about 2.0 millimeter, the composition releases carbon disulfide slower than the same quantity of a 32.8 weight percent aqueous solution of sodium tetrathiocarbonate applied to identical soil in the same way.

47. A liquid composition comprising a carbon disulfide precursor and a thickener and exhibiting the property that, when the composition is applied to sandy soil comprising at least 90 weight percent sand having particle sizes in the range of about 0.05 to about 2.0 millimeter, the composition permeates the soil slower than the same quantity of an otherwise-identical composition without the thickener applied to identical soil in the same way.

48. A liquid composition comprising a carbon disulfide precursor and a thickener and exhibiting the property that, when the composition is applied to sandy soil comprising at least 90 weight percent sand having particle sizes in the range of about 0.05 to about 2.0 millimeter, the composition releases carbon disulfide slower than the same quantity of an otherwise-identical composition without the thickener applied to identical soil in the same way.

49. A composition according to claim 45, 46 or 47, wherein the carbon disulfide precursor comprises a thiocarbonate.

50. A solid composition comprising a carbon disulfide precursor and a thickener, said composition being soluble or dispersible in a liquid carrier to form a liquid composition as defined in any of claims 1 to 22.

51. A method which comprises applying to soil near the base of a plant a liquid composition comprising a thiocarbonate and a thickener, and then applying sufficient moisture to move the thiocarbonate into the soil.

52. A method according to claim 51, wherein the thickener is effective to retard the release of carbon disulfide from the thiocarbonate until the thiocarbonate is moved into the soil.

53. A method according to claim 51, wherein the thickener is effective to retard the decomposition of the thiocarbonate until the moisture has been applied.

European Patent Office

# EUROPEAN SEARCH REPORT

Application Number

EP 90 31 0221

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X<br>Y | US-A-3 060 084 (C.A. LITTLER)<br>* Column 1, lines 10-15; column 1, line 56 - column 3, line 70; column 4, lines 23-37; examples 1,5; claims * | 1-4,7,9,11-13,17,45-48<br>5,6,8,10,14-16,18-31,49-53 | A 01 N 25/18<br>A 01 N 59/06<br>A 01 N 59/04<br>A 01 N 59/02<br>A 01 N 47/14<br>A 01 N 47/06 |
| D,Y | US-A-4 726 144 (D.C. YOUNG)<br>* The whole document * | 5,8,10,15,16,20,23-31,49-53 | |
| Y | RECUEIL DES TRAVAUX CHIMIQUES DES PAYS BAS, vol. 70, 1951, pages 917-939, Den Haag, NL; H.L. KLÖPPING et al.: "Investigations on organic fungicides. IV. Chemical constitution and fungistatic activity of dithio-carbamates, thiuram sulphides and structurally related compounds"<br>* Pages 917,918; pages 921-923, table 1; page 925, table 2, compounds 30-32; page 927, table 4, compound 40; page 930, table 5, compound 57 * | 6,21 | **TECHNICAL FIELDS SEARCHED (Int. Cl.5)**<br>A 01 N |
| Y | CHEMICAL PATENTS INDEX, BASIC ABSTRACTS JOURNAL, section C: AGDOC, 29th October 1986, accession no. 86-236762/36, Derwent Publications Ltd, London, GB; & JP-A-61 167 603 (E.C. KAGAKU KOGYO K.K.) | 14,18,19,22 | |

-/-

The present search report has been drawn up for all claims

| Place of search | Date of completion of the search | Examiner |
|---|---|---|
| THE HAGUE | 18-01-1991 | MUELLNERS W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent Office

# EUROPEAN SEARCH REPORT

Application Number

EP 90 31 0221

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-1 271 575 (GALDONOST DYNAMICS) * Page 1, lines 51-90; page 3, lines 70-126; claims 1,6,16,17 * --- | 32-38 | |
| Y | FR-A-2 312 476 (IMPERIAL CHEMICAL IND.) * Page 2, line 7 - page 3, line 27 * --- | 32-35, 37 | |
| Y | US-A-3 701 416 (K.-G. ELLINGER) * Column 2, lines 9-37 * --- | 36 | |
| Y | JOURNAL OF THE AMERICAN CHEMICAL SOCIETY, vol. 49, 1927, pages 491-494, Washington, DC, US; D. TWISS: "A study of alipliatic polysulfides" * Page 491, paragraphs 1,2; page 493, last paragraph - page 494 * --- | 38 | |
| X | US-A-3 558 302 (R.H. SALVESEN) * Column 1, lines 35-60; column 4, line 72 - column 5, line 14 * --- | 1,7,9, 39-41 | TECHNICAL FIELDS SEARCHED (Int. Cl.5) |
| X | US-A-4 824 665 (L. ROTON) * Column 2, line 45 - column 3, line 56; claims 1-6 * --- | 1,2,7,9 ,42-44 | |
| X | US-A-3 820 976 (W.N. WELLS) * Whole document * --- | 1-3,7,9 ,11-14, 17,23-25,29-31,45-48 | |
| X | EP-A-0 300 947 (SAININ, S.A.) * Page 2, lines 21-43; page 3, lines 45-47,63,64; page 4, lines 20-23; claims 1,6 * --- -/- | 1-3,7,9 ,11-14, 17,23-26,28 | |

The present search report has been drawn up for all claims

| Place of search | Date of completion of the search | Examiner |
|---|---|---|
| THE HAGUE | 18-01-1991 | MUELLNERS W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

# EUROPEAN SEARCH REPORT

Application Number

EP 90 31 0221

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2 778 768 (G.L. BROWN)<br>* Example 3; claims 1,2 *<br>--- | 1,2,7,9,11,12,17,45-48 | |
| X | CM-A- 3 191 (MONTECATINI EDISON)<br>* Page 2, line 25 - page 3, line 17; page 5, table, formulations 2,3,6,12,15-21 *<br>--- | 1-4,7,9 | |
| X | US-A-2 870 058 (D.J. LODER)<br>* Column 1, line 27 - column 2, line 9; example 2 *<br>--- | 1,2,7,9,12 | |
| X | DE-C- 161 266 (CHEMISCHE FABRIK IN BILLWÄRDER)<br>* The whole document *<br>--- | 1,2,9,11,17,23-25,29,39-41 | |
| X | US-A-3 337 399 (J.C. DAWSON)<br>* Column 1, line 9 - column 2, line 41; examples 10-12 *<br>--- | 1,2,9,11,17,23-25,29 | TECHNICAL FIELDS SEARCHED (Int. Cl.5) |
| X | DE-C- 653 124 (CHEMISCHE FABRIK IN BILLWÄRDER)<br>* Page 1, lines 1-56 *<br>----- | 1,2,9,11,17 | |

The present search report has been drawn up for all claims

| Place of search | Date of completion of the search | Examiner |
|---|---|---|
| THE HAGUE | 18-01-1991 | MUELLNERS W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)